# EUROPÄISCHE PATENTSCHRIFT

(11) **EP 1 401 219 B1**
(45) Veröffentlichungstag und Bekanntmachung des Hinweises auf die Patenterteilung: **12.10.2005**
(21) Anmeldenummer: 02405809.1
(22) Anmeldetag: 17.09.2002
(51) Int. Cl.: H04Q 7/22, H04M 3/42

(54) **System, Verfahren und Verbindungszentrale zum Erstellen von Kommunikationsverbindungen**
System, method and exchange for establishing communication connections
Système, procédé et centre de commutation pour l'établissement des liaisons de communication

(43) Veröffentlichungstag der Anmeldung: 24.03.2004
(73) Patentinhaber: Swisscom AG, 3000 Bern 29 (CH)
(72) Erfinder: Messmer, Bruno, Dr., 3600 Thun (CH); Balsiger, Peter, Dr., 3012 Bern (CH)
(74) Vertreter: BOVARD AG

(56) Entgegenhaltungen:
- WO-A-02/28125
- US-B1- 6 204 844
- US-B1- 6 278 454

## Beschreibung

### Technisches Gebiet

Die vorliegende Erfindung betrifft ein System, ein Verfahren und eine Verbindungszentrale zum Erstellen von Kommunikationsverbindungen. Die Erfindung betrifft insbesondere ein System, ein Verfahren und eine Verbindungszentrale zum Erstellen von Kommunikationsverbindungen zwischen Mobilendgeräten in einem Mobilfunknetz, die jeweils durch eine Kommunikationsadresse bestimmt sind.

### Stand der Technik

In herkömmlichen Kommunikationssystemen muss beim Erstellen einer Kommunikationsverbindung zwischen zwei Kommunikationsendgeräten vom initiierenden, anrufenden Kommunikationsteilnehmer dem Kommunikationssystem die Kommunikationsadresse, typischerweise die Rufnummer, des anzurufenden Kommunikationsendgeräts angegeben werden. Die Rufnummer des anzurufenden Kommunikationsendgeräts wird vom anrufenden Kommunikationsendgerät an das Kommunikationssystem übermittelt, welches eine Kommunikationsverbindung zwischen dem anrufenden und dem anzurufenden Kommunikationsendgerät erstellt. Herkömmliche Kommunikationssysteme verfügen auch über Funktionen, um eine Kommunikationsverbindung zwischen Kommunikationsendgeräten zu erstellen, wenn die Kommunikationsadressen der beiden Kommunikationsendgeräte vorgängig durch eines der Kommunikationsendgeräte an das Kommunikationssystem übermittelt wurden. Mit einer so genannten Konferenzschaltung kann in herkömmlichen Kommunikationssystemen auch eine Kommunikationsverbindung zwischen mehr als zwei Kommunikationsendgeräten erstellt werden. Ohne Angabe der Kommunikationsadresse eines anzurufenden Kommunikationsendgeräts ist es jedoch für einen Kommunikationsteilnehmer nicht möglich, mit seinem Kommunikationsendgerät eine Kommunikationsverbindung mit dem Kommunikationsendgerät eines anderen Kommunikationsteilnehmers zu erstellen.

Das Dokument US 6,278,454 offenbart eine grafische Benutzeroberfläche, mittels welcher Anrufe effizient überwacht und/oder kontrolliert werden können. Dabei werden die einzelnen Teilnehmer durch grafische Symbole und die Anrufe zwischen den einzelnen Teilnehmern durch entsprechende grafische Verbindungen repräsentiert. Die Netzoperatoren können durch Manipulationen an den grafischen Symbolen Anrufe, sowie den Netzzustand steuern.

Dank der Methode offenbart in der Schrift WO 02/28125 können kompatible Individuen in einer bestimmten Region identifiziert und in den Kontakt gebracht werden. Ein Teilnehmer übermittelt Registrierungsmitteilungen an einen entlegenen Server. Diese Registrierungsmitteilungen beinhalten Teilnehmerprofile und Positionsangaben. Der Server ermittelt kompatible Individuen basierend auf den Profil- und Positionsangaben und sendet diese Information zurück an den Teilnehmer. Auch Lokalisierungsmechanismen wie GPS (Global Positioning System) können einbezogen werden.

### Darstellung der Erfindung

Es ist eine Aufgabe der vorliegenden Erfindung, ein neues System, ein neues Verfahren und eine neue Verbindungszentrale zum Erstellen von Kommunikationsverbindungen vorzuschlagen, welche nicht die Nachteile des Stands der Technik aufweisen und welche es insbesondere ermöglichen, zwischen Mobilendgeräten wie Mobilfunktelefonen oder mit Mobilfunkmodulen ausgerüstete Laptop- oder PDA-Computer (Personal Data Assistant) Kommunikationsverbindungen zu erstellen, ohne dass von den Kommunikationsteilnehmern die Kommunikationsadressen der Partnerendgeräte angegeben werden müssen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass die Mobilendgeräte in einer Verbindungszentrale registriert werden wobei jeweils eine Symbolidentifizierung eines grafischen Symbols, das auf einer sich ausserhalb der Mobilendgeräte befindenden Anzeigeeinheit dargestellt wird, durch das zu registrierende Mobilendgerät über eine Kommunikationsverbindung, vorzugsweise über das Mobilfunknetz, an die Verbindungszentrale übermittelt wird, und wobei jeweils die Kommunikationsadresse des zu registrierenden Mobilendgeräts in der Verbindungszentrale dem grafischen Symbol zugeordnet wird, das durch die Symbolidentifizierung bestimmt ist, die vom zu registrierenden Mobilendgerät übermittelt wurde. Erfindungsgemäss werden in der Verbindungszentrale eine erste Kommunikationsadresse, die einem ersten grafischen Symbol zugeordnet ist, und eine zweite Kommunikationsadresse, die einem zweiten grafischen Symbol zugeordnet ist, ausgewählt wobei Steuerbefehle für die grafischen Symbole von den registrierten Mobilendgeräten an die Verbindungszentrale übermittelt werden, wobei die Verbindungszentrale entsprechend den von einem registrierten Mobilendgerät entgegengenommenen Steuerbefehlen die Position des diesem registrierten Mobilendgerät zugeordneten grafischen Symbols auf der Anzeigeeinheit verändert, und wobei die Verbindungszentrale die erste Kommunikationsadresse und die zweite Kommunikationsadresse in Abhängigkeit von den Positionen der grafischen Symbole auf der Anzeigeeinheit auswählt, und durch die Verbindungszentrale eine Kommunikationsverbindung erstellt zwischen einem ersten registrierten Mobilendgerät, das durch die erste Kommunikationsadresse bestimmt ist, und einem zweiten registrierten Mobilendgerät, das durch die zweite Kommunikationsadresse bestimmt ist. Durch die Verknüpfung der Kommunikationsadresse eines Mobilendgeräts mit grafischen Symbolen, die auf einer externen, für die Benutzer der Mobilendgeräte sichtbaren Anzeigeinheit dargestellt werden, wird ermöglicht, dass Benutzer Partnerendgeräte für die Erstellung einer Kommunikationsverbindung durch Referenzieren eines ausgewählten grafischen Symbols bestimmen können, ohne die Kommunikationsadresse des Partnerendgeräts kennen zu müssen. Da die Kommunikationsadressen der an einer Kommunikationsverbindung teilnehmenden Mobilendgeräte mit grafischen Symbolen verknüpft sind und durch die Benutzer nur über diese grafischen Symbole referenziert werden, können anonyme Kommunikationsverbindungen erstellt werden, in denen die Kommunikationspartner, respektive die Kommunikationsadressen ihrer Mobilendgeräte, den Benutzern nicht bekannt sind. Obwohl die Kommunikationspartner anonym bleiben, ist es jedoch für die Benutzer möglich, einen gewünschten Kommunikationspartner durch Referenzieren des zugeordneten grafischen Symbols zu selektieren.

Dadurch, dass die Benutzer die Positionen der ihnen zugewiesenen grafischen Symbole auf der Anzeigeeinheit mittels Steuerbefehlen verändern können und dass die Kommunikationspartner in Abhängigkeit der Positionen der grafischen Symbole auf der Anzeigeeinheit ausgewählt werden, kann den Benutzern auf der Anzeigeeinheit eine grafische Benutzeroberfläche zur Auswahl von Kommunikationspartnern angeboten werden. Beispielsweise kann die Benutzeroberfläche so definiert werden, dass die Verbindungszentrale die Kommunikationsverbindung zwischen einem ersten registrierten Mobilendgerät und einem zweiten registrierten Mobilendgerät erstellt, wenn sich das entsprechende erste grafische Symbol und das entsprechende zweite grafische Symbol auf der Anzeigeeinheit innerhalb einer definierten Nähe zueinander befinden, zum Beispiel wenn sie sich berühren. Oder die Benutzeroberfläche kann so definiert werden, dass jeweils eine Kommunikationsverbindung zwischen denjenigen Mobilendgeräten erstellt wird, deren zugeordneten grafischen Symbole auf der Anzeigeinheit innerhalb eines definierten Bereichs positioniert sind, zum Beispiel innerhalb eines Kreises oder eines Rechtecks.

In einer Ausführungsvariante werden in der Verbindungszentrale Benutzerprofildaten jeweils den Kommunikationsadressen der Mobilendgeräte zugeordnet gespeichert und die Verbindungszentrale wählt die erste Kommunikationsadresse und die zweite Kommunikationsadresse in Abhängigkeit von den dem ersten grafischen Symbol zugeordneten Benutzerprofildaten und den dem zweiten grafischen Symbol zugeordneten Benutzerprofildaten aus. Durch die Speicherung und das Vergleichen von Benutzerprofildaten können Kommunikationspartner unter Berücksichtigung ihrer individuellen Interessen für Kommunikationsverbindungen selektiert werden und/oder es kann verhindert werden, dass Benutzer miteinander verbunden werden, die völlig gegensätzliche Interessen haben. Die von Benutzerprofildaten abhängige Wahl von Kommunikationspartnern kann unabhängig von oder in Kombination mit der oben beschriebenen Auswahl mittels Steuerbefehlen angewandt werden.

Vorzugsweise werden in der Verbindungszentrale Anzeigeidentifizierungen von Anzeigeeinheiten und geografische Positionsangaben der Anzeigeeinheiten jeweils einander zugeordnet gespeichert und die Verbindungszentrale registriert die Mobilendgeräte in Abhängigkeit von der geografischen Position des betreffenden Mobilendgeräts und den in der Anzeigedatenbank gespeicherten geografischen Positionen der Anzeigeeinheiten. Dadurch kann die Registrierung auf Mobilendgeräte beschränkt werden, die tatsächlich bei einer Anzeigeeinheit lokalisiert sind.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch eine mit einer Anzeigeeinheit verbundene Verbindungszentrale illustriert, die über ein Mobilfunknetz mit Mobilendgeräten verbunden ist.
Figur 2 zeigt ein Blockdiagramm, welches schematisch eine Verbindungszentrale illustriert, die mit mehreren Anzeigeeinheiten verbunden ist, die in verschiedenen Lokalitäten lokalisiert sind.

### Wege zur Ausführung der Erfindung

In den Figuren werden einander entsprechende Teile durch gleiche Bezugszeichen bezeichnet.

Das Bezugszeichen 1 bezeichnet ein System zum Erstellen einer Kommunikationsverbindung zwischen Mobilendgeräten 5, 6, welches eine Verbindungszentrale 2 und eine Anzeigeeinheit 3 umfasst.

Die Anzeigeeinheit 3 ist als Bildschirm oder Projektionssystem ausgeführt. Die Anzeigeeinheit 3 befindet sich in einer Lokalität 7, beispielsweise eine Bar, ein Nachtklub oder eine Diskothek, wo sie von den Benutzern der Mobilendgeräte 5, 6 sichtbar ist. In der Lokalität können auch mehrere Anzeigeeinheiten 3 installiert werden, die jeweils den selben Bildinhalt darstellen. Auf der Anzeigeeinheit 3 sind grafische Symbole 31, 32 dargestellt, denen jeweils eine sichtbare Symbolidentifizierung 311, 321 zugeordnet ist, beispielsweise eine Nummer, ein Name oder ein alphanumerischer Code. Wie später beschrieben wird, werden die grafischen Symbole 31, 32 als virtuelle Repräsentanten von Benutzern, als so genannte Avatare eingesetzt.

Eine Anzeigesteuerung 27 ist vorzugsweise in der Verbindungszentrale 2 ausgeführt und über eine Breitbandverbindung mit der Anzeigeeinheit 3 verbunden. Um weniger Bandbreite für die Verbindung zwischen der Verbindungszentrale 2 und der Anzeigeinheit 3 einzusetzen, kann die Anzeigeinheit 3 auch selbst mit einer sich in der selben Lokalität 7 befindenden Anzeigesteuerung 27' versehen werden, die von der Verbindungszentrale 2 aus mit einfachen Steuerbefehlen gesteuert wird, die Positions- und/oder Richtungsangaben der grafischen Symbole 31, 32 umfassen.

Die Verbindungszentrale 2 ist mit einem Mobilfunknetz 4 verbunden, beispielsweise ein GSM- (Global System for Mobile Communication), ein UMTS-Netz (Universal Mobile Telephone System) oder ein anderes beispielsweise satellitenbasiertes Mobilfunknetz oder ein drahtloses lokales Netzwerk, ein so genanntes WLAN (Wireless Local Area Network).

Die Mobilendgeräte 5, 6 sind mobile Kommunikationsendgeräte, zum Beispiel Mobilfunktelefone oder mit Mobilfunkmodulen ausgerüstete Laptop- oder PDA-Computer (Personal Data Assistant), die über das Mobilfunknetz 4 mit der Verbindungszentrale 2 kommunizieren können. Die Mobilendgeräte 5, 6 sind im Mobilfunknetz 4 jeweils durch ihnen zugeordnete Kommunikationsadressen adressierbar, insbesondere durch Rufnummern, so genannte MSISDN-Nummern (Mobile Subscriber ISDN).

Die Verbindungszentrale 2 umfasst eine Profildatenbank 25, eine Anzeigedatenbank 26 sowie mehrere funktionale Module 21, 22, 23, 24 und 27, die als programmierte Softwaremodule ausgeführt sind. Der Fachmann wird verstehen, dass die funktionalen Module 21, 22, 23, 24 und 27 vollständig oder wenigstens teilweise hardwaremässig ausgeführt werden können. Die Verbindungszentrale 2 umfasst einen oder mehrere miteinander verbundene Computer zur Ausführung der Softwaremodule und der Datenbanken 25, 26. In der Profildatenbank 25 sind Benutzerprofildaten von Benutzern des Mobilfunknetzes 4 gespeichert. Die Benutzerprofildaten umfassen Angaben über individuelle Interessen des Benutzers. Den Profildaten eines Benutzers ist jeweils die Kommunikationsadresse seines Mobilendgeräts 5, 6 und/oder eine Benutzeridentifizierung zugeordnet gespeichert, beispielsweise seine internationale Mobilnetzteilnehmeridentifizierung (IMSI, International Mobile Subscriber Identity). Die Profildaten können durch die betreffenden Benutzer beispielsweise über Internet Portale in die Profildatenbank 25 eingegeben und verändert werden. In der Anzeigedatenbank 26 sind Anzeigeidentifizierungen, die Anzeigeeinheiten 3 identifizieren, und geografische Positionsangaben, die jeweils die geografische Position einer Anzeigeeinheit 3 angeben, jeweils einander zugeordnet gespeichert.

Die Verbindungszentrale 2 umfasst ein Verbindungsmodul 21 zum Erstellen von Kommunikationsverbindungen im Mobilfunknetz 4 zwischen Mobilendgeräten 5, 6, die durch ihre Kommunikationsadressen bestimmt sind. Die Kommunikationsverbindung ist wahlweise eine Sprachverbindung oder eine Datenverbindung, beispielsweise für den Austausch von SMS- (Short Messaging System) oder MMS-Meldungen (Multimedia Messaging Service). Das Verbindungsmodul 21 ist vorzugsweise mit einer Vermittlungsstelle (MSC, Mobile Switching Center) und/oder einer SMS-Zentrale (SMSC, Short Messaging Service Centre) des Mobilfunknetzes 4 verbunden.

Die Verbindungszentrale 2 umfasst ein Registrierungsmodul 22 zum Registrieren von Mobilendgeräten 5, 6 in der Verbindungszentrale 2. Das Registrierungsmodul 22 nimmt Symbolidentifizierungen 311, 321 entgegen, die von interessierten Benutzern mittels ihrer Mobilendgeräte 5, 6 über das Mobilfunknetz 4 an die Verbindungszentrale 2 übermittelt wurden, beispielsweise mittels einer SMS- oder USSD-Kurzmeldung (Unstructured Supplementary Services Data). Das Registrierungsmodul 22 bestimmt die Kommunikationsadresse des Mobilendgeräts 5, 6, von dem die Symbolidentifizierung empfangen wurde, und speichert die Symbolidentifizierung und die Kommunikationsadresse einander zugeordnet in der Verbindungszentrale 2. Dadurch wird der Benutzer respektive sein Mobilendgerät 5, 6 in der Verbindungszentrale 2 registriert und das durch die übermittelte Symbolidentifizierung 311, 321 bestimmte grafische Symbol 31, 32 wird dem Benutzer als Avatar auf der Anzeigeeinheit 3 zugeordnet.

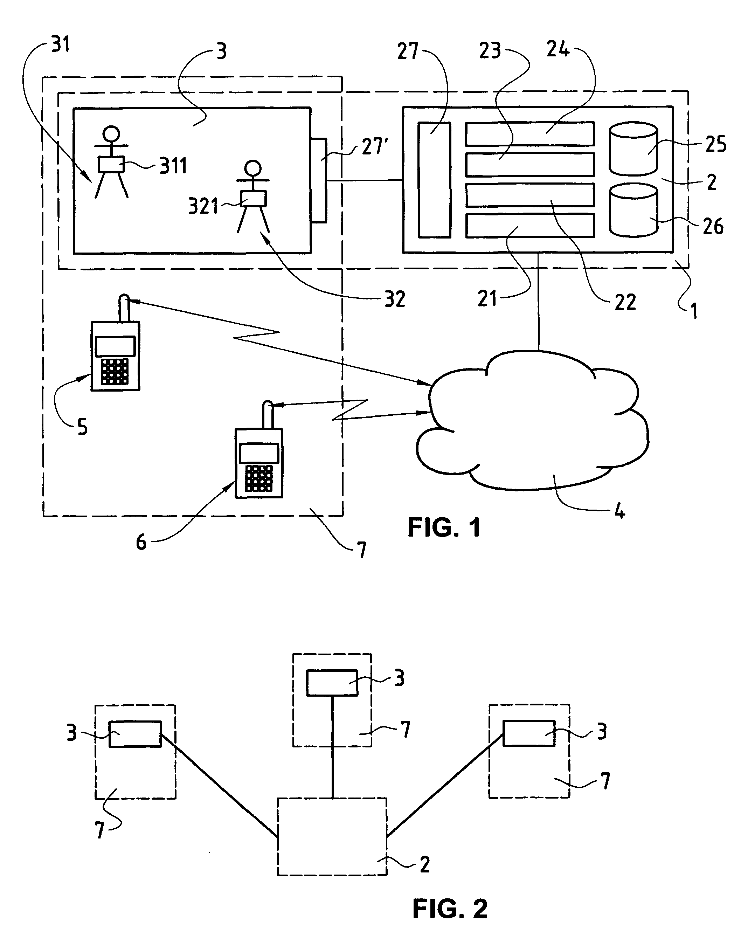

Wie in der Figur 2 schematisch dargestellt wird, können mehrere Anzeigeeinheiten 3 in verschiedenen Lokalitäten 7 mit der Verbindungszentrale 2 verbunden sein. Um einen Benutzer eindeutig der Anzeigeeinheit 3 in der Lokalität 7 zuzuordnen, in der sich der Benutzer aufhält, oder anders ausgedrückt, um die Kommunikationsadresse des Mobilendgeräts 5, 6 eines Benutzers eindeutig der Symbolidentifizierung 311, 321 eines grafischen Symbols 31, 32 auf der Anzeigeeinheit 3 in der betreffenden Lokalität 7 zuzuordnen, sind die Symbolidentifizierungen 311, 321 entweder eindeutig für alle Anzeigeeinheiten 3, sie umfassen beispielsweise die jeweilige Anzeigeidentifizierung, oder bei der Registrierung wird zusammen mit der Symbolidentifizierung 311, 321 die Anzeigeidentifizierung der betreffenden Anzeigeeinheit 3 an die Verbindungszentrale 2 übermittelt, oder die Anzeigeeinheit 3 wird vorzugsweise bei der Registrierung in der Verbindungszentrale 2 automatisch bestimmt, wie untenstehend beschrieben wird.

Vorzugsweise wird die Registrierung auf Benutzer beschränkt, die sich mit ihren Mobilendgeräten 5, 6 in der Nähe der Anzeigeeinheit 3, das heisst in der Lokalität 7 aufhalten. Das Registrierungsmodul 22 bestimmt zu diesem Zweck die geografische Position der Mobilendgeräte 5, 6, beispielsweise durch den Zugriff auf ein so genanntes HLR (Home Location Register) im Mobilfunknetz 4, wo Angaben über die Positionen der Mobilfunkteilnehmer geführt werden. Das Registrierungsmodul 22 vergleicht die geografischen Positionen der Mobilendgeräte 5, 6 mit den in der Anzeigedatenbank 26 gespeicherten geografischen Positionen der Anzeigeeinheiten 3. Falls sich herausstellt, dass sich die Mobilendgeräte 5, 6 nicht in der Nähe einer Anzeigeeinheit 3 befinden, werden sie nicht in der Verbindungszentrale 2 registriert. Ansonsten kann die Anzeigeidentifizierung der Anzeigeeinheit 3 bestimmt werden, in deren Nähe sich der betreffende Benutzer aufhält, und in der Verbindungszentrale 2 der betreffenden Kommunikationsadresse und der betreffenden Symbolidentifizierung zugeordnet gespeichert werden.

Die Verbindungszentrale 2 umfasst ein Symbolsteuermodul 24 zum Steuern der grafischen Symbole 31, 32 auf der Anzeigeeinheit 3. Das Symbolsteuermodul 24 nimmt Steuerbefehle für die grafischen Symbole 31, 32 entgegen, die von registrierten Mobilendgeräten 5, 6 über das Mobilfunknetz 4 an die Verbindungszentrale 2 übermittelt wurden, beispielsweise mittels einer SMS- oder USSD-Kurzmeldung (Unstructured Supplementary Services Data). Die Steuerbefehle werden von den Benutzern mittels Bedienungselementen der Mobilendgeräte 5, 6 oder mittels gesprochener Sprachbefehle eingegeben. Die Steuerbefehle umfassen vorzugsweise Richtungsangaben (links, rechts, hinauf, hinunter); sie können auch Positionsangaben umfassen. Das Symbolsteuermodul 24 verändert die Positionsdaten (z.B. Koordinaten) der grafischen Symbole 31, 32 entsprechend den Steuerbefehlen, die von den Mobilendgeräten 5, 6 erhalten wurden, deren Kommunikationsadresse den betreffenden grafischen Symbolen 31, 32, respektive deren Symbolidentifizierungen 311, 321 zugeordnet sind. Basierend auf den aktuellen Positionsdaten der grafischen Symbole 31, 32 wird die Anzeigeeinheit 3 durch die Anzeigesteuerung 27, respektive 27', entsprechend angesteuert und damit die grafischen Symbole 31, 32 entsprechend den vom Benutzer der Mobilendgeräte 5, 6 übermittelten Steuerbefehle auf der Anzeigeeinheit 3 bewegt.

Die Verbindungszentrale 2 umfasst ein mit dem Registrierungsmodul 22 verbundenes Auswahlmodul 23 zum Bestimmen von Kommunikationsadressen von registrierten Mobilendgeräten 5, 6, für welche eine Kommunikationsverbindung erstellt werden soll, und zum Zuführen der bestimmten Kommunikationsadressen zum Verbindungsmodul 21. Das Auswahlmodul 23 bestimmt die Kommunikationsadressen auf Grund der aktuellen Positionsdaten der grafischen Symbole 31, 32, die den Kommunikationsadressen zugeordnet sind. Die Regeln für das Auswahlmodul können so festgelegt werden, dass Kommunikationsadressen von registrierten Mobilendgeräten 5, 6, denen grafische Symbole 31, 32 zugeordnet sind, die sich innerhalb eines definierten Gebiets auf der Anzeigeeinheit 3 befinden, beispielsweise innerhalb eines auf der Anzeigeeinheit 3 dargestellten Rechtecks oder Kreises, dem Verbindungsmodul 21 zur Erstellung einer Kommunikationsverbindung zugeführt werden. Vorzugsweise werden jedoch Kommunikationsadressen von registrierten Mobilendgeräten 5, 6, die grafischen Symbolen 31, 32 zugeordnet sind, die sich auf der Anzeigeeinheit 3 innerhalb einer definierten Nähe zueinander befinden, zum Beispiel grafische Symbole 31, 32, die sich berühren, dem Verbindungsmodul 21 zur Erstellung einer Kommunikationsverbindung zugeführt. Zusätzlich oder als Alternative berücksichtigt das Auswahlmodul 23 zudem die Benutzerprofildaten, die den Kommunikationsadressen der registrierten Mobilendgeräte 5, 6 zugeordnet sind. Die Benutzerprofildaten verschiedener Benutzer mit registrierten Mobilendgeräten 5, 6 werden verglichen und die Kommunikationsadressen, denen Benutzerprofildaten mit übereinstimmenden Interessensgebieten zugeordnet sind, werden dem Verbindungsmodul 21 zur Erstellung einer Kommunikationsverbindung zugeführt.

Ein erster Benutzer der sich in die Lokalität 7 begibt und mittels seines Mobilendgeräts 5 mit einem anderen Benutzer in dieser Lokalität kommunizieren möchte, registriert sich zunächst in der Verbindungszentrale 2, indem er sich ein als "frei" gekennzeichnetes grafisches Symbol 31 auf der Anzeigeeinheit 3 auswählt und dessen Symbolidentifizierung 311 mittels seines Mobilendgeräts 5 an die Verbindungszentrale 2 übermittelt.

Als nächstes sendet der Benutzer gemäss der bevorzugten Ausführung mittels seines Mobilendgeräts 5 Steuerbefehle an die Verbindungszentrale 2, um seinen Avatar, das grafische Symbol 31, in Richtung des als "registriert" gekennzeichneten grafischen Symbols 32 zu bewegen, das heisst in Richtung des Avatars eines unbekannten anderen Benutzers in der Lokalität 7. Wenn sich die beiden grafischen Symbole 31 und 32 auf der Anzeigeeinheit 3 berühren, werden die den grafischen Symbolen 31 und 32 zugeordneten Kommunikationsadressen durch das Auswahlmodul 23 dem Verbindungsmodul 21 zugeführt, welches eine Kommunikationsverbindung zwischen dem Mobilendgerät 5 und dem Mobilendgerät 6 erstellt. Optional können vorgängig die betreffenden Benutzerprofildaten verglichen werden. Bei fehlender Übereinstimmung der individuellen Interessen können vom Auswahlmodul 23 entsprechende Mitteilungen an die Mobilendgeräte 5, 6 übermittelt werden.

Abschliessend soll hier festgehalten werden, dass der Fachmann weitere Ausführungsformen gemäss den Ansprüchen finden kann. Zum Beispiel kann das System 1 ganz oder teilweise in der Lokalität 7 ausgeführt werden, und die Übermittlung von Symbolidentifizierungen und Steuerbefehlen von den Mobilendgeräten 5, 6 an die Verbindungszentrale 2 kann über kontaktlose Geräteschnittstellen, wie beispielsweise Bluetooth, oder drahtlose lokale Netzwerke (WLAN), erfolgen.

## Patentansprüche

1. Verfahren zum Erstellen einer Kommunikationsverbindung zwischen Mobilendgeräten (5, 6), die jeweils durch eine Kommunikationsadresse bestimmt sind, in einem Mobilfunknetz (4), **gekennzeichnet durch**,
Registrieren der Mobilendgeräte (5, 6) in einer Verbindungszentrale (2),
wobei jeweils eine Symbolidentifizierung (311, 321) eines grafischen Symbols (31, 32), das auf einer sich ausserhalb der Mobilendgeräte (5, 6) befindenden Anzeigeeinheit (3) dargestellt wird, **durch** das zu registrierende Mobilendgerät (5, 6) über eine Kommunikationsverbindung an die Verbindungszentrale (2) übermittelt wird, und
wobei jeweils die Kommunikationsadresse des zu registrierenden Mobilendgeräts (5, 6) in der Verbindungszentrale (2) dem grafischen Symbol (31, 32) zugeordnet wird, das **durch** die Symbolidentifizierung (311, 321) bestimmt ist, die vom zu registrierenden Mobilendgerät (5, 6) übermittelt wurde,
Auswahl einer ersten Kommunikationsadresse, die einem ersten grafischen Symbol (31) zugeordnet ist, und einer zweiten Kommunikationsadresse, die einem zweiten grafischen Symbol (32) zugeordnet ist, in der Verbindungszentrale (2),
wobei Steuerbefehle für die grafischen Symbole (31, 32) von den registrierten Mobilendgeräten (5, 6) an die Verbindungszentrale (2) übermittelt werden,
wobei die Verbindungszentrale (2) entsprechend den von einem registrierten Mobilendgerät (5, 6) entgegengenommenen Steuerbefehlen die Position des diesem registrierten Mobilendgerät (5, 6) zugeordneten grafischen Symbols (31, 32) auf der Anzeigeeinheit (3) verändert, und
wobei die Verbindungszentrale (2) die erste Kommunikationsadresse und die zweite Kommunikationsadresse in Abhängigkeit von den Positionen der grafischen Symbole auf der Anzeigeeinheit (3) auswählt, und
Erstellen einer Kommunikationsverbindung zwischen einem ersten registrierten Mobilendgerät (5), das **durch** die erste Kommunikationsadresse bestimmt ist, und einem zweiten registrierten Mobilendgerät (6), das **durch** die zweite Kommunikationsadresse bestimmt ist, **durch** die Verbindungszentrale (2).

2. Verfahren gemäss Anspruch 1, **dadurch gekennzeichnet, dass** die Verbindungszentrale (2) die Kommunikationsverbindung zwischen dem ersten registrierten Mobilendgerät (5) und dem zweiten registrierten Mobilendgerät (6) erstellt, wenn sich das erste grafische Symbol (31) und das zweite grafische Symbol (32) auf der Anzeigeeinheit (3) innerhalb einer definierten Nähe zueinander befinden.

3. Verfahren gemäss einem der Ansprüche 1 oder 2, **dadurch gekennzeichnet, dass** die Mobilendgeräte (5, 6) Symbolidentifizierungen (311, 321) und Steuerbefehle über das Mobilfunknetz (4) an die Verbindungszentrale (2) übermitteln.

4. Verfahren gemäss einem der Ansprüche 1 bis 3, **dadurch gekennzeichnet, dass** in der Verbindungszentrale (2) Benutzerprofildaten jeweils den Kommunikationsadressen der Mobilendgeräte (5, 6) zugeordnet gespeichert werden, und dass die Verbindungszentrale (2) die erste Kommunikationsadresse und die zweite Kommunikationsadresse in Abhängigkeit von den dem ersten grafischen Symbol (31) zugeordneten Benutzerprofildaten und den dem zweiten grafischen Symbol (32) zugeordneten Benutzerprofildaten auswählt.

5. Verfahren gemäss einem der Ansprüche 1 bis 4, **dadurch gekennzeichnet, dass** in der Verbindungszentrale (2) Anzeigeidentifizierungen von Anzeigeeinheiten (3) und geografische Positionsangaben der Anzeigeeinheiten (3) jeweils einander zugeordnet gespeichert werden, und dass die Verbindungszentrale (2) die Mobilendgeräte (5, 6) in Abhängigkeit von der geografischen Position des betreffenden Mobilendgeräts (5, 6) und den in der Verbindungszentrale (2) gespeicherten geografischen Positionen der Anzeigeeinheiten (3) registriert.

6. System (1) zum Erstellen einer Kommunikationsverbindung zwischen Mobilendgeräten (5, 6), umfassend ein Verbindungsmodul (21) zum Erstellen der Kommunikationsverbindung zwischen Mobilendgeräten (5, 6) in einem Mobilfunknetz (4), die jeweils durch eine Kommunikationsadresse bestimmt sind, **dadurch gekennzeichnet,**
**dass** es mindestens eine sich ausserhalb der Mobilendgeräte (5, 6) befindende Anzeigeeinheit (3) umfasst,
**dass** es ein Registrierungsmodul (22) umfasst zum Registrieren von Mobilendgeräten (5, 6), jeweils durch Entgegennehmen einer Symbolidentifizierung (311, 321) eines auf der Anzeigeeinheit (3) dargestellten grafischen Symbols (31, 32) über eine Kommunikationsverbindung von einem der Mobilendgeräte (5, 6) und durch Zuordnen der Kommunikationsadresse dieses Mobilendgeräts (5, 6) zum grafischen Symbol (31, 32), das durch die entgegengenommene Symbolidentifizierung (311, 321) bestimmt ist,
**dass** es ein Symbolsteuermodul (24) umfasst, zum Entgegennehmen von Steuerbefehlen für die grafischen Symbole von registrierten Mobilendgeräten (5, 6), wobei das Symbolsteuermodul (24) so eingerichtet ist, dass es entsprechend den von einem registrierten Mobilendgerät (5, 6) entgegengenommenen Steuerbefehlen die Position des diesem registrierten Mobilendgerät (5, 6) zugeordneten grafischen Symbols (31, 32) auf der Anzeigeeinheit (3) verändert,
**dass** es ein mit dem Registrierungsmodul (22) verbundenes Auswahlmodul (23) umfasst zum Zuführen einer ersten Kommunikationsadresse eines ersten registrierten Mobilendgeräts (5), die einem ersten grafischen Symbol (31) zugeordnet ist, und einer zweiten Kommunikationsadresse eines zweiten registrierten Mobilendgeräts (6), die einem zweiten grafischen Symbol (32) zugeordnet ist, zum Verbindungsmodul (21) zum Erstellen einer Kommunikationsverbindung zwischen dem ersten registrierten Mobilendgerät (5) und dem zweiten registrierten Mobilendgerät (6) wobei das Auswahlmodul (23) so eingerichtet ist, dass es die erste Kommunikationsadresse und die zweite Kommunikationsadresse in Abhängigkeit von den Positionen der grafischen Symbole (31, 32) auf der Anzeigeeinheit (3) auswählt..

7. System (1) gemäss Anspruch 6, **dadurch gekennzeichnet, dass** das Auswahlmodul (23) so eingerichtet ist, dass es die erste Kommunikationsadresse und die zweite Kommunikationsadresse dem Verbindungsmodul (21) zum Erstellen einer Kommunikationsverbindung zuführt, wenn sich das erste grafische Symbol (31) und das zweite grafische Symbol (32) auf der Anzeigeeinheit (3) innerhalb einer definierten Nähe zueinander befinden.

8. System (1) gemäss einem der Ansprüche 6 oder 7, **dadurch gekennzeichnet, dass** das Registrierungsmodul (22) und das Symbolsteuermodul (24) über das Mobilfunknetz (4) mit den Mobilendgeräten (5, 6) verbindbar sind.

9. System (1) gemäss einem der Ansprüche 6 bis 8, **dadurch gekennzeichnet, dass** es eine Profildatenbank (25) umfasst, in welcher Benutzerprofildaten jeweils den Kommunikationsadressen der Mobilendgeräte (5, 6) zugeordnet sind, und dass das Auswahlmodul (23) so eingerichtet ist, dass es die erste Kommunikationsadresse und die zweite Kommunikationsadresse in Abhängigkeit von den dem ersten grafischen Symbol (31) zugeordneten Benutzerprofildaten und den dem zweiten grafischen Symbol (32) zugeordneten Benutzerprofildaten auswählt.

10. System (1) gemäss einem der Ansprüche 6 bis 9, **dadurch gekennzeichnet, dass** es eine Anzeigedatenbank (26) umfasst, in welcher Anzeigeidentifizierungen von Anzeigeeinheiten (3) und geografische Positionsangaben der Anzeigeeinheiten (3) jeweils einander zugeordnet gespeichert sind, und dass das Registrierungsmodul (22) so eingerichtet ist, dass es die Mobilendgeräte (5, 6) in Abhängigkeit von der geografischen Position des betreffenden Mobilendgeräts (5, 6) und den in der Anzeigedatenbank (26) gespeicherten geografischen Positionen der Anzeigeeinheiten (3) registriert.

11. Verbindungszentrale (2) zum Erstellen einer Kommunikationsverbindung zwischen Mobilendgeräten (5, 6), umfassend ein Verbindungsmodul (21) zum Erstellen der Kommunikationsverbindung zwischen Mobilendgeräten (5, 6) in einem Mobilfunknetz (4), die jeweils durch eine Kommunikationsadresse bestimmt sind, **dadurch gekennzeichnet,**
**dass** sie mit einer sich ausserhalb der Mobilendgeräte (5, 6) befindenden Anzeigeeinheit (3) verbindbar ist,
**dass** sie ein Registrierungsmodul (22) umfasst zum Registrieren von Mobilendgeräten (5, 6), jeweils durch Entgegennehmen einer Symbolidentifizierung (311, 321) eines auf der Anzeigeeinheit (3) dargestellten grafischen Symbols (31, 32) über eine Kommunikationsverbindung von einem der Mobilendgeräte (5, 6) und durch Zuordnen der Kommunikationsadresse dieses Mobilendgeräts (5, 6) zum grafischen Symbol (31, 32), das durch die entgegengenommene Symbolidentifizierung (311, 321) bestimmt ist,
**dass** sie ein Symbolsteuermodul (24) umfasst, zum Entgegennehmen von Steuerbefehlen für die grafischen Symbole (31, 32) von registrierten Mobilendgeräten (5, 6), wobei das Symbolsteuermodul (24) so eingerichtet ist, dass es entsprechend den von einem registrierten Mobilendgerät (5, 6) entgegengenommenen Steuerbefehlen die Position des diesem registrierten Mobilendgerät (5, 6) zugeordneten grafischen Symbols (31, 32) auf der Anzeigeeinheit (3) verändert,
**dass** sie ein mit dem Registrierungsmodul (22) verbundenes Auswahlmodul (23) umfasst zum Zuführen einer ersten Kommunikationsadresse eines ersten registrierten Mobilendgeräts (5), die einem ersten grafischen Symbol (31) zugeordnet ist, und einer zweiten Kommunikationsadresse eines zweiten registrierten Mobilendgeräts (6), die einem zweiten grafischen Symbol (32) zugeordnet ist, zum Verbindungsmodul (21) zum Erstellen einer Kommunikationsverbindung zwischen dem ersten registrierten Mobilendgerät (5) und dem zweiten registrierten Mobilendgerät (6), wobei das Auswahlmodul (23) so eingerichtet ist, dass es die erste Kommunikationsadresse und die zweite Kommunikationsadresse in Abhängigkeit von den Positionen der grafischen Symbole (31, 32) auf der Anzeigeeinheit (3) auswählt.

12. Verbindungszentrale (2) gemäss Anspruch 11, **dadurch gekennzeichnet, dass** das Auswahlmodul (23) so eingerichtet ist, dass es die erste Kommunikationsadresse und die zweite Kommunikationsadresse dem Verbindungsmodul (21) zum Erstellen einer Kommunikationsverbindung zuführt, wenn sich das erste grafische Symbol (31) und das zweite grafische Symbol (32) auf der Anzeigeeinheit (3) innerhalb einer definierten Nähe zueinander befinden.

13. Verbindungszentrale (2) gemäss einem der Ansprüche 11 oder 12, **dadurch gekennzeichnet, dass** sie über das Mobilfunknetz (4) mit den Mobilendgeräten (5, 6) verbindbar ist.

14. Verbindungszentrale (2) gemäss einem der Ansprüche 11 bis 13, **dadurch gekennzeichnet, dass** sie eine Profildatenbank (25) umfasst, in welcher Benutzerprofildaten jeweils den Kommunikationsadressen der Mobilendgeräte (5, 6) zugeordnet sind, und dass das Auswahlmodul (23) so eingerichtet ist, dass es die erste Kommunikationsadresse und die zweite Kommunikationsadresse in Abhängigkeit von den dem ersten grafischen Symbol (31) zugeordneten Benutzerprofildaten und den dem zweiten grafischen Symbol (32) zugeordneten Benutzerprofildaten auswählt.

15. Verbindungszentrale (2) gemäss einem der Ansprüche 11 bis 14, **dadurch gekennzeichnet, dass** sie eine Anzeigedatenbank (26) umfasst, in welcher Anzeigeidentifizierungen von Anzeigeeinheiten (3) und geografische Positionsangaben der Anzeigeeinheiten (3) jeweils einander zugeordnet gespeichert sind, und dass das Registrierungsmodul (22) so eingerichtet ist, dass es die Mobilendgeräte (5, 6) in Abhängigkeit von der geografischen Position des betreffenden Mobilendgeräts (5, 6) und den in der Anzeigedatenbank (26) gespeicherten geografischen Positionen der Anzeigeeinheiten (3) registriert.

## Claims

1. Method for establishing a communication connection between mobile terminals (5, 6) in a mobile radio network, which terminals are each identified by a communication address, **characterised by**
registration of the mobile terminals (5, 6) in a connecting exchange (2),
a symbol identification (311, 321) of a graphic symbol (31, 32), which is shown on a display unit (3) located outside the mobile terminals (5, 6), being transmitted in each case via a communication connection to the connecting exchange (2) by the mobile terminal (5, 6) to be registered, and
the communication address of the mobile terminal (5, 6) to be registered being assigned in each case in the connecting exchange (2) to the graphic symbol (31, 32), which is identified through the symbol identification (311, 321) which has been transmitted from the mobile terminal (5, 6) to be registered,
selection of a first communication address, which is assigned to a first graphic symbol (31), and of a second communication address, which is assigned to a second graphic symbol (32), in the connecting exchange (2),
control commands for the graphic symbol (31, 32) being transmitted to the connecting exchange (2) from the registered mobile terminals (5, 6),
in accordance with the control commands received from a registered mobile terminal (5, 6), the connecting exchange (2) changing, on the display unit (3), the position of the graphic symbol (31, 32) assigned to this registered mobile terminal (5, 6), and
the connecting exchange (2) selecting the first communication address and the second communication address in dependence upon the positions of the graphic symbols on the display unit (3), and
establishment by the connecting exchange (2) of a communication connection between a first registered mobile terminal (5), which is identified by the first communication address, and a second registered mobile terminal (6), which is identified by the second communication address.

2. Method according to claim 1, **characterised in that** the connecting exchange (2) establishes the communication connection between the first registered mobile terminal (5) and the second registered mobile terminal (6) if the first graphic symbol (31) and the second graphic symbol (32) are located within a defined proximity to one another on the display unit (3).

3. Method according to one of the claims 1 or 2, **characterised in that** the mobile terminals (5, 6) transmit symbol identifications (311, 321) and control commands over the mobile radio network to the connecting exchange (2).

4. Method according to one of the claims 1 to 3, **characterised in that** in the connecting exchange (2) user profile data are stored assigned in each case to the communication addresses of the mobile terminals (5, 6), and **in that** the connecting exchange (2) selects the first communication address and the second communication address in dependence upon the user profile data assigned to the first graphic symbol (31) and the user profile data assigned to the second graphic symbol (32).

5. Method according to one of the claims 1 to 4, **characterised in that** in the connecting exchange (2) display identifications of display units (3) and geographic position indications of the display units (3) are stored in each case assigned to one another, and **in that** the connecting exchange (2) registers the mobile terminals (5, 6) in depend ence upon the geographic position of the respective mobile terminal (5, 6) and the geographic positions of the display units (3) stored in the connecting exchange (2).

6. System (1) for establishing a communication connection between mobile terminals (5, 6), comprising a connecting module (21) for establishing the communication connection between mobile terminals (5, 6) in a mobile radio network (4), which are each identified by a communication address, **characterised**
**in that** it comprises at least one display unit (3) located outside the mobile terminals (5, 6),
**in that** it comprises a registration module (22) for registering mobile terminals (5, 6), in each case by receiving over a communication connection from one of the mobile terminals (5, 6) a symbol identification (311, 321) for a graphic symbol (31, 32) shown on the display unit (3) and by assigning the communication address of this mobile terminal (5, 6) to the graphic symbol (31, 32) which is identified through the received symbol identification (311, 321),
**in that** it comprises a symbol control module (24), for receiving control commands for the graphic symbols of registered mobile terminals (5, 6), the symbol control module (24) being set up such that, in accordance with the control commands received from a registered mobile terminal (5, 6), it changes on the display unit (3) the position of the graphic symbol (31, 32) assigned to this registered mobile terminal (5, 6),
**in that** it comprises a selection module (23) connected to the registration module (22) for conveying a first communication address of a first registered mobile terminal (5), which is assigned to a first graphic symbol, and a second communication address of a second registered mobile terminal (6), which is assigned to a second graphic symbol (32) to the connecting module (21) for establishing a communication connection between the first registered mobile terminal (5) and the second registered mobile terminal (6), the selection module (23) being set up such that it selects the first communication address and the second communication address in dependence upon the positions of the graphic symbols (31, 32) on the display unit (3).

7. System (1) according to claim 6, **characterized in that** the selection module (23) is set up such that it conveys the first communication address and the second communication address to the connecting module (21) for establishing a communication connection if the first graphic symbol (31) and the second graphic symbol (32) are located on the display unit (3) within a defined proximity to one another.

8. System (1) according to one of the claims 6 or 7, **characterised in that** the registration module (22) and the symbol control module (24) are connectible to the mobile terminals (5, 6) via the mobile radio network (4).

9. System (1) according to one of the claims 6 to 8, **characterised in that** it comprises a profile database (25) in which user profile data are assigned in each case to the communication addresses of the mobile terminals (5, 6), and **in that** the selection module (23) is set up such that it selects the first communication address and the second communication address in dependence upon the user profile data assigned to the first graphic symbol (31) and the user profile data assigned to the second graphic symbol (32).

10. System (1) according to one of the claims 6 to 9, **characterised in that** it comprises a display database (26) in which display identifications of display units (3) and geographic position indications of the display units (3) are stored in each case assigned to one another, and **in that** the registration module (22) is set up such that it registers the mobile terminals (5, 6) in dependence upon the geographic position of the respective mobile terminal (5, 6) and the geographic positions of the display units (3) stored in the display database (26).

11. Connecting exchange (2) for establishing a communication connection between mobile terminals (5, 6), comprising a connecting module (21) for establishing the communication connection between mobile terminals (5, 6) in a mobile radio network (4), which are identified in each case through a communication address, **characterised**
**in that** it is connectible to a display unit (3) located outside the mobile terminals (5, 6),
**in that** it comprises a registration module (22) for registering mobile terminals (5, 6), in each case by receiving over a communication connection from one of the mobile terminals (5, 6) a symbol identification (311, 321) for a graphic symbol (31, 32) shown on the display unit (3) and by assigning the communication address of this mobile terminal (5, 6) to the graphic symbol (31, 32) which is identified through the received symbol identification (311, 321),
**in that** it comprises a symbol control module (24), for receiving control commands for the graphic symbols (31, 32) of registered mobile terminals (5, 6), the symbol control module (24) being set up such that, in accordance with the control commands received from a registered mobile terminal (5, 6), it changes on the display unit (3) the position of the graphic symbol (31, 32) assigned to this registered mobile terminal (5, 6),
**in that** it comprises a selection module (23) connected to the registration module (22) for conveying a first communication address of a first registered mobile terminal (5), which is assigned to a first graphic symbol, and a second communication address of a second registered mobile terminal (6), which is assigned to a second graphic symbol (32), to the connecting module (21) for establishing a communication connection between the first registered mobile terminal (5) and the second registered mobile terminal (6), the selection module (23) being set up such that it selects the first communication address and the second communication address in dependence upon the positions of the graphic symbols (31, 32) on the display unit (3).

12. Connecting exchange (2) according to claim 11, **characterized in that** the selection module (23) is set up such that it conveys the first communication address and the second communication address to the connecting module (21) for establishing a communication connection if the first graphic symbol (31) and the second graphic symbol (32) are located on the display unit (3) within a defined proximity to one another.

13. Connecting exchange (2) according to one of the claims 11 or 12, **characterised in that** it is connectible to the mobile terminals (5, 6) via the mobile radio network (4).

14. Connecting exchange (2) according to one of the claims 11 to 13, **characterised in that** it comprises a profile database (25) in which user profile data are assigned in each case to the communication addresses of the mobile terminals (5, 6), and **in that** the selection module (23) is set up such that it selects the first communication address and the second communication address in dependence upon the user profile data assigned to the first graphic symbol (31) and the user profile data assigned to the second graphic symbol (32).

15. Connecting exchange (2) according to one of the claims 11 to 14, **characterised in that** it comprises a display database (26) in which display identifications of display units (3) and geographic position indications of the display units (3) are stored in each case assigned to one another, and **in that** the registration module (22) is set up such that it registers the mobile terminals (5, 6) in dependence upon the geographic position of the respective mobile terminal (5, 6) and the geographic positions of the display units (3) stored in the display database (26).

## Revendications

1. Procédé pour l'établissement d'une connexion de communication entre des terminaux mobiles (5, 6) qui sont définis par une adresse de communication, dans un réseau mobile (4), **caractérisé par**
- enregistrement des terminaux mobiles (5, 6) dans une centrale de communication (2),
- une identification de symbole (311, 211) d'un symbole graphique (31, 32) qui est représenté sur une unité d'affichage (3) se trouvant à l'extérieur des terminaux mobiles (5, 6), qui est transmise par le terminal mobile à enregistrer (5, 6) par une connexion de communication à la centrale de communication (2), et
l'adresse de communication du terminal mobile à enregistrer (5, 6) étant associée respectivement dans la centrale de communication au symbole graphique (31, 32) qui est défini par l'identification de symbole (311, 211) qui a été transmise par le terminal mobile à enregistrer (5, 6),
- sélection d'une première adresse de communication qui est associée au premier symbole graphique (31) et une seconde adresse de communication qui est associée au second symbole graphique (32) dans la centrale de communication (2),
des instructions de commande pour les symboles graphiques (31, 32) étant transmises par les terminaux mobiles enregistrés (5, 6) à la centrale de communication (2),
la centrale de communication (2) modifiant en fonction des instructions de commande reçues par un terminal mobile (5, 6) enregistré la position du symbole graphique (31, 32) associé au terminal mobile (5, 6) sur l'unité d'affichage (3), et
la centrale de communication (2) sélectionnant la première adresse de communication et la seconde adresse de communication en fonction des positions des symboles graphiques sur l'unité d'affichage (3), et
- établissement d'une connexion de communication entre un premier terminal mobile enregistré (5) qui est défini par la premier adresse de communication et un second terminal mobile enregistré (6) qui est défini par la seconde adresse de communication, par la centrale de communication (2).

2. Procédé selon la revendication 1, **caractérisé en ce que** la centrale de communication (2) établit la connexion de communication entre le premier terminal mobile enregistré (5) et le second terminal mobile enregistré (6) quand le premier symbole graphique (31) et le second symbole graphique (32) se trouvent sur l'unité d'affichage (3) à l'intérieur d'une proximité définie l'un par rapport à l'autre.

3. Procédé selon l'une des revendications 1 ou 2, **caractérisé en ce que** les terminaux mobiles (5, 6) transmettent des identifications (311, 321) et des instructions de commande par la centrale de communication (2).

4. Procédé selon l'une des revendications 1 ou 2, **caractérisé en ce que** dans la centrale de communication (2) des donnés de profils utilisateurs sont stockées et associées aux adresses de communication des terminaux mobiles (5, 6), et **en ce que** la centrale de communication (2) sélectionne la première adresse de communication et la second adresse de communication en fonction des données de profil utilisateur associée au premier symbole graphique (31) et des données de profil utilisateur associées au second symbole graphique (32).

5. Procédé selon l'une des revendications 1 à 4, **caractérisé en ce que** dans la centrale de connexion (2), des identifications d'affichage et des indications de position géographiques des unités d'affichages (3) sont stockées et associées respectivement par des unités d'affichage (3) et **en ce que** la centrale de communication (2) enregistre les terminaux mobiles (5, 6) en fonction de la position géographique du terminal mobile (5, 6) considéré et des positions géographiques des unités d'affichage (3) enregistrées dans la centrale de communication (2).

6. System (1) pour l'établissement d'une connexion de communication entre des terminaux mobiles (5, 6), comprenant un module de connexion (21) pour l'établissement de la connexion de communication entre des terminaux mobiles (5, 6) dans un réseau de radiotéléphonie mobile (4) qui sont définis respectivement par une adresse de communication, **caractérisé**
**en ce qu'**il comprend au moins une unité d'affichage (3) se trouvant à l'extérieur des terminaux mobiles (5, 6),
**en ce qu'**il comprend un module d'enregistrement (22) pour l'enregistrement de terminaux mobiles (5, 6) respectivement par réception d'une identification de symbole (311, 321) d'un symbole graphique (31, 32) représenté sur l'unité d'affichage (3) par une connexion de communication depuis l'un des terminaux mobiles (5, 6) et par association de l'adresse de communication de ce terminal mobile (5, 6) au symbole graphique (31, 32) qui est défini par l'identification de symbole réceptionnée (311, 321),
**en ce qu'**il comprend un module de commande de symbole (24) pour la réception d'instructions de commande pour les symboles graphiques de terminaux mobiles enregistrés, le module de commande de symbole (24) étant agencé de sorte qu'il modifie en fonction des instructions de commande réceptionnées par un terminal mobile (5, 6) enregistré la position du symbole graphique (31, 32) associé au terminal mobile enregistré (5, 6) sur l'unité d'affichage (3),
**en ce qu'**il comprend un module de sélection (23) relié au module d'enregistrement (22) pour l'apport d'une première adresse de communication d'un premier terminal mobile enregistré (5), qui est associé à un premier symbole graphique (31) et une seconde adresse de communication d'un second terminal mobile enregistré (6) qui est associée à un second symbole graphique(32), au module de communication (21) pour l'établissement d'une connexion de communication entre le premier terminal mobile enregistré (5) et le second terminal mobile enregistré (6), le module de sélection (23) étant agencé de sorte qu'il sélectionne la première dresse de communication et la seconde adresse de communication en fonction des positions des symboles graphiques (31, 32) sur l'unité d'affichage (3).

7. Système (1) selon la revendication 6, **caractérisé en ce que** le module de sélection (23) est agencé de sorte qu'il fournit la première adresse de communication et la seconde adresse de communication au module de communication (21) pour l'établissement de connexion de communication quand le premier symbole graphique (31) et le second symbole graphique (32) se trouvent sur l'unité d'affichage (3) à l'intérieur d'une proximité définie entre eux.

8. Système (1) selon l'une des revendications 6 ou 7, **caractérisé en ce que** le module d'enregistrement (22) et le module de commande de symbole (34) sont reliables par le réseau de radiotéléphonie mobile (4) avec les terminaux mobiles (5, 6).

9. Système (1) selon l'une des revendications 6 à 8, **caractérisé en ce qu'**il comprend une banque de données de profils (25) dans laquelle des données de profils d'utilisateurs sont associées respectivement aux adresses de communication des terminaux mobiles (5, 6), **en ce que** le module de sélection (23) est agencé de sorte qu'il sélectionne la premier adresse de communication et la seconde adresse de communication en fonction des données de profils d'utilisateurs associés au premier symbole graphique (31) et en fonction des données de profils d'utilisateurs associées au second symbole graphique (32).

10. Système (1) selon l'une des revendications 6 à 8, **caractérisé en ce qu'**il comprend une banque de données d'affichage (26) dans laquelle des identification d'affichage d'unités d'affichage (3) et d'indications de position géographiques sont stockées et associées respectivement entre elles, et **en ce que** le module d'enregistrement (22) est agencé de sorte qu'il enregistre les terminaux mobiles (5, 6) en fonction de la position géographique du terminal mobile concerné (5, 6) et des positions géographiques des unités d'affichage (3), stockées dans la banque de données d'affichage (26).

11. Centrale de communication (2) pour l'établissement d'une connexion de communication entre des terminaux mobiles (5, 6), comprenant un module de connexion (21) pour l'établissement de la connexion de communication entre des terminaux mobiles (5, 6) dans un réseau de radiotéléphonie mobile (4) qui sont définis respectivement par une adresse de communication, **caractérisé**
**en ce qu'**il comprend au moins une unité d'affichage (3) se trouvant à l'extérieur des terminaux mobiles (5, 6),
**en ce qu'**il comprend un module d'enregistrement (22) pour l'enregistrement de terminaux mobiles (5, 6) respectivement par réception d'une identification de symbole (311, 321) d'un symbole graphique (31, 32) représenté sur l'unité d'affichage (3) par une connexion de communication depuis l'un des terminaux mobiles (5, 6) et par association de l'adresse de communication de ce terminal mobile (5, 6) au symbole graphique (31, 32) qui est défini par l'identification de symbole réceptionnée (311, 321),
**en ce qu'**il comprend un module de commande de symbole (24) pour la réception d'instructions de commande pour les symboles graphiques (31, 32) de terminaux mobiles enregistrés (5, 6), le module de commande de symbole (24) étant agencé de sorte qu'il modifie en fonction des instructions de commande réceptionnées par un terminal mobile enregistré (5, 6) la position du symbole graphique (31, 32) associé au terminal mobile enregistré (5, 6) sur l'unité d'affichage (3),
**en ce qu'**il comprend un module de sélection (23) relié au module d'enregistrement (22) pour l'apport d'une première adresse de communication d'un premier terminal mobile enregistré (5), qui est associée à un premier symbole graphique (31) et une seconde adresse de communication d'u second terminal mobile enregistré (6) qui est associée à u second symbole graphique(32), au module de communication (21) pour l'établissement d'une connexion de communication entre le premier terminal mobile enregistré (5) et le second terminal mobile enregistré (6), le module de sélection (23) étant agencé de sorte qu'il sélectionne la première adresse de communication et la seconde adresse de communication en fonction des positions des symboles graphiques (31, 32) sur l'unité d'affichage (3).

12. Centrale de communication (2) selon la revendication 11, **caractérisée en ce que** le module de sélection (23) est agencé de sorte qu'il fournit la première adresse de communication et la seconde adresse de communication au module de communication (21) pour l'établissement de connexion de communication quand le premier symbole graphique (31) et le second symbole graphique (32) se trouvent sur l'unité d'affichage (3) à l'intérieur d'une proximité définie entre eux.

13. Centrale de communication (2) selon l'une des revendications 11 ou 12, **caractérisée en ce qu'**elle est reliable aux terminaux mobiles (5, 6) par le réseau de radiotéléphonie mobile (4).

14. Centrale de communication (2) selon l'une des revendications 11 à 13, **caractérisée en ce qu'**elle comprend une banque de données de profils (25) dans laquelle des données de profils d'utilisateurs sont associées respectivement aux adresses de communication des terminaux mobiles (5, 6), **en ce que** le module de sélection (23) est agencé de sorte qu'il sélectionne la premier adresse de communication et la seconde adresse de communication en fonction des données de profils d'utilisateurs associés au premier symbole graphique (31) et en fonction des données de profils d'utilisateurs associées au second symbole graphique (32).

15. Centrale de communication (2) selon l'une des revendications 11 à 14, **caractérisée en ce qu'**elle comprend une banque de données d'affichage (26) dans laquelle des identifications d'affichage d'unités d'affichage (3) et d'indications de position géographiques sont stockées et associées respectivement entre elles, et **en ce que** le module d'enregistrement (22) est agencé de sorte qu'il enregistre les terminaux mobiles (5, 6) en fonction de la position géographique du terminal mobile concerné (5, 6) et des positions géographiques des unités d'affichage (3) stockées dans la banque de données d'affichage (26).
